# EUROPEAN PATENT APPLICATION

(11) **EP 3 025 769 A1**
(43) Date of publication of application: **01.06.2016**
(21) Application number: 13889979.4
(22) Date of filing: 25.07.2013
(51) Int. Cl.: A63F 13/00

(54) **IMAGE PROCESSING PROGRAM, SERVER DEVICE, IMAGE PROCESSING SYSTEM, AND IMAGE PROCESSING METHOD**

(71) Applicant: Square Enix Holdings Co., Ltd., Tokyo 160-8430 (JP)
(72) Inventor: MATSUURA, Michio, Osaka-shi Osaka 530-0013 (JP)
(74) Representative: Pitchford, James Edward
(86) International application number: PCT/JP2013/004533
(87) International publication number: WO 2015/011741

(57) **Abstract**

A server device for reducing a processing load for generation of an image to be provided to a client device, functions as: a player object controller that controls an operation of a player object; a group setter that sets player objects within a predetermined distance as one group; a common camera controller that arranges a common virtual camera for each group and determines a position of the common virtual camera so that player objects that belong to a group are included in an imaging range; an individual camera controller that arranges an individual virtual camera for each player object that does not belong to the group and determines a position of the individual virtual camera so that a corresponding player object is included in an imaging range; and an image generator that generates three-dimensional virtual space images captured by the common virtual camera and the individual virtual camera.

## Description

### Technical Field

The present invention relates to an image processing program, and the like that generate a three-dimensional virtual space image captured by using a virtual camera and provide the image to a client device.

### Background Art

In recent years, as disclosed in Pamphlet of International Publication No. 2009/138878, a configuration in which a game is provided to a client device of a user from a server device has been proposed. A game image is generated by the server device, and is transmitted to each client device.

The server device generates a game image corresponding to each client device connected thereto. To this end, for example, in a game in which a large number of users participate in a common three-dimensional virtual space at the same time, since a server device should generate a game image corresponding to each of the client devices of the large number of users, a processing load for generation of a game image increases.

Further, as disclosed in JP-A-2012-245347, a device that efficiently performs a game image drawing process has also been proposed.

In general, a game image drawing process is performed using a virtual camera arranged in a three-dimensional virtual space. The three-dimensional virtual space included in an imaging range of the virtual camera is generated as a two-dimensional image, and a game image is finally generated. Here, how the virtual camera is arranged in the three-dimensional virtual space is important in generating the game image. For example, as disclosed in JP-A-2010-68882, Japanese Patent No. 3871224, and JP-A-2012-100991, a device in which a virtual camera is controlled in consideration of an object in a three-dimensional virtual space has been proposed.

### Citation List

### Patent Literature

[PTL 1] Pamphlet of International Publication No. 2009/138878
[PTL 2] JP-A-2012-245347
[PTL 3] JP-A-2010-68882
[PTL 4] Japanese Patent No. 3871224
[PTL 5] JP-A-2012-100991

### Summary of Invention

### Technical Problem

In the above-mentioned configuration in which an image to be provided to the client device is generated by the server device, reduction of an image generation processing failure becomes a problem.

An objective of at least one of embodiments of the present invention is to solve the above-described problem.

### Solution to Problem

From a non-limiting point of view, according to an aspect of the present invention, there is provided an image processing program causing a computer device which is a server device that is connected to communicate with one or more client devices, generates a player object operated by a user of each client device in a common three-dimensional virtual space, and generates an image in the three-dimensional virtual space to function as: a player object controller that controls an operation of a player object corresponding to each client device based on user operation information received from each client device; a group setter that sets player objects within a predetermined distance among the player objects as one group; a common camera controller that arranges a common virtual camera for each group, and determining a position of the common virtual camera so that player objects that belong to a group corresponding to the common virtual camera are included in an imaging range, based on positions of the player objects that belong to the group; an individual camera controller that arranges an individual virtual camera for each player object that does not belong to the group, and determining a position of the individual virtual camera so that a player object corresponding to the individual virtual camera is included in an imaging range, based on a position of the player object; and an image generator that generates a three-dimensional virtual space image, captured by the common virtual camera, to be transmitted to a client device corresponding to each of the player objects that belong to the group, and generating a three-dimensional virtual space image, captured by the individual virtual camera, to be transmitted to a client device corresponding to each player object that does not belong to the group.

From a non-limiting point of view, according to another aspect of the present invention, there is provided an image processing system that includes a client device and a server device that are connected to each other through a communication network, generates a player object operated by a user of each client device in a common three-dimensional virtual space, and generates an image in the three-dimensional virtual space, the server device including: a player object controller that controls an operation of a player object corresponding to each client device based on user operation information received from each client device; a group setter that sets player objects within a predetermined distance among the player objects as one group; a common camera controller that arranges a common virtual camera for each group, and determining a position of the common virtual camera so that player objects that belong to a group corresponding to the common virtual camera are included in an imaging range, based on positions of the player objects that belong to the group; an individual camera controller that arranges an individual virtual camera for each player object that does not belong to the group, and determining a position of the individual virtual camera so that a player object corresponding to the individual virtual camera is included in an imaging range, based on a position of the player object; and an image generator that generates a three-dimensional virtual space image, captured by the common virtual camera, to be transmitted to a client device corresponding to each of the player objects that belong to the group, and generating a three-dimensional virtual space image, captured by the individual virtual camera, to be transmitted to a client device corresponding to each player object that does not belong to the group.

### Advantageous Effects of Invention

According to the respective embodiments of the present application, one or more problems are solved.

### Brief Description of Drawings

Fig. 1 is a block diagram illustrating an example of a configuration of an image processing system corresponding to at least one of embodiments of the present invention.
Fig. 2 is a block diagram illustrating a configuration of a video game processing server device corresponding to at least one of the embodiments of the present invention.
Fig. 3 is a diagram illustrating a group setting process corresponding to at least one of the embodiments of the present invention.
Fig. 4 is a diagram schematically illustrating a common virtual camera and a virtual screen arranged in a three-dimensional virtual space corresponding to at least one of the embodiments of the present invention.
Fig. 5 is a flowchart illustrating an example of a game process corresponding to at least one of the embodiments of the present invention.
Fig. 6 is a block diagram illustrating a configuration of a video game processing server device corresponding to at least one of the embodiments of the present invention.
Fig. 7 is a diagram illustrating a positioning process of a common virtual camera corresponding to at least one of the embodiments of the present invention.
Fig. 8 is a diagram illustrating a positioning process of a common virtual camera corresponding to at least one of the embodiments of the present invention.
Fig. 9 is a flowchart illustrating an example of a game process corresponding to at least one of the embodiments of the present invention.
Fig. 10 is a flowchart illustrating an example of a positioning process of a common virtual camera corresponding to at least one of the embodiments of the present invention.
Fig. 11 is a block diagram illustrating a configuration of a video game processing server device corresponding to at least one of the embodiments of the present invention.
Fig. 12 is a flowchart illustrating an example of a game process corresponding to at least one of the embodiments of the present invention.
Fig. 13 is a flowchart illustrating an example of a positioning process of a common virtual camera corresponding to at least one of the embodiments of the present invention.
Fig. 14 is a block diagram illustrating a configuration of a video game processing server device corresponding to at least one of the embodiments of the present invention.
Fig. 15 is a flowchart illustrating an example of a game process corresponding to at least one of the embodiments of the present invention.
Fig. 16 is a block diagram illustrating a configuration of a video game processing server device corresponding to at least one of the embodiments of the present invention.
Fig. 17 is a diagram illustrating a positioning process of a common virtual camera corresponding to at least one of the embodiments of the present invention.
Fig. 18 is a flowchart illustrating an example of a game process corresponding to at least one of the embodiments of the present invention.
Fig. 19 is a flowchart illustrating an example of a positioning process of a common virtual camera corresponding to at least one of the embodiments of the present invention.
Fig. 20 is a block diagram illustrating a configuration of a video game processing server device corresponding to at least one of the embodiments of the present invention.
Fig. 21 is a flowchart illustrating an example of a game process corresponding to at least one of the embodiments of the present invention.
Fig. 22 is a block diagram illustrating a configuration of a video game processing server device corresponding to at least one of the embodiments of the present invention.
Fig. 23 is a flowchart illustrating an example of a game process corresponding to at least one of the embodiments of the present invention.
Fig. 24 is a block diagram illustrating a configuration of a video game processing server device corresponding to at least one of the embodiments of the present invention.
Fig. 25 is a diagram illustrating a positioning process of a common virtual camera corresponding to at least one of the embodiments of the present invention.
Fig. 26 is a flowchart illustrating an example of a game process corresponding to at least one of the embodiments of the present invention.
Fig. 27 is a flowchart illustrating an example of a positioning process of a common virtual camera corresponding to at least one of the embodiments of the present invention.
Fig. 28 is a block diagram illustrating a configuration of a video game processing server device corresponding to at least one of the embodiments of the present invention.
Fig. 29 is a diagram illustrating a positioning process of an individual virtual camera corresponding to at least one of the embodiments of the present invention.
Fig. 30 is a flowchart illustrating an example of a game process corresponding to at least one of the embodiments of the present invention.
Fig. 31 is a block diagram illustrating a configuration of a video game processing server device corresponding to at least one of the embodiments of the present invention.
Fig. 32 is a diagram illustrating a positioning process of a common virtual camera corresponding to at least one of the embodiments of the present invention.
Fig. 33 is a diagram illustrating a positioning process of a common virtual camera corresponding to at least one of the embodiments of the present invention.
Fig. 34 is a flowchart illustrating an example of a game process corresponding to at least one of the embodiments of the present invention.
Fig. 35 is a flowchart illustrating an example of a positioning process of a common virtual camera corresponding to at least one of the embodiments of the present invention.

### Description of Embodiments

Hereinafter, examples of embodiments of the present invention will be described with reference to the drawings. In the examples of the respective embodiments to be described below, various kinds of components may be appropriately combined with each other in a range without contradiction. Further, the content described as an example of one embodiment may be omitted in another embodiment. Furthermore, description of an operation or a process that is not related to a feature of each embodiment may be omitted. In addition, the order of various processes that form various flows to be described below may be appropriately changed in a range without contradiction in processing content thereof.

### [First embodiment]

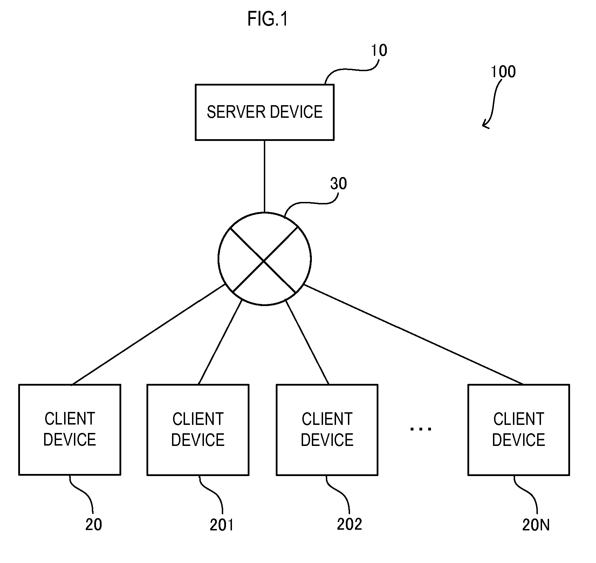

Fig. 1 is a block diagram illustrating an example of a configuration of a video game processing system (image processing system) 100 according to an embodiment of the present invention. As shown in Fig. 1, the video game processing system 100 includes a video game processing server device 10, and client devices 20 and 201 to 20N (N is an arbitrary integer) which are respectively used by plural users (players) who play a video game. The configuration of the video game system 100 is not limited thereto, and a configuration in which plural players use a single client device may be used, or a configuration in which plural server devices are provided may be used.

The video game processing server device 10 and the plural client devices 20 and 201 to 20N are connected to a communication network 30 such as the Internet, respectively.

The video game processing system 100 has various functions for executing a video game that generates a player object operated by a user of each of client devices 20 and 201 to 20N in the same (common) three-dimensional virtual space (including a synchronized virtual space and a non-synchronized virtual space) and generates a three-dimensional virtual space image (game image).

The video game processing server device 10 is managed by a manager of the video game system 100, and has various functions for providing information relating to a video game to the client devices 20 and 201 to 20N. For example, the video game processing server device 10 provides information about the game image obtained by drawing a part of the three-dimensional virtual space. In this embodiment, the video game processing server device 10 is configured by an information processing device such as a WWW server, and includes a storage medium that stores a variety of information.

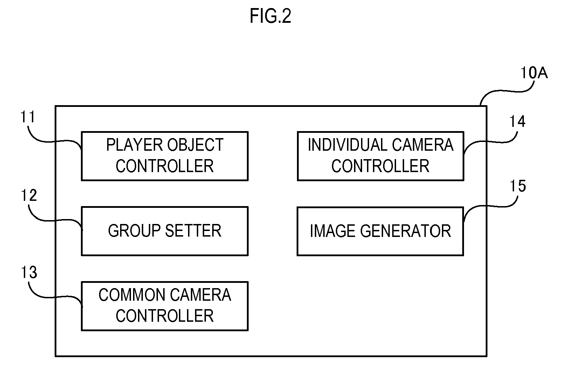

Fig. 2 is a block diagram illustrating a configuration of a video game processing server device 10A (server device 10A) which is an example of a configuration of the video game processing server device 10. The server device 10A at least includes a player object controller 11, a group setter 12, a common camera controller 13, an individual camera controller 14, and an image generator 15 as a game program (image processing program) stored in a storage medium (not shown) is executed by a controller (not shown), or the like. The server device 10A includes a general configuration for operating a video game, such as a controller or a communicator, and description thereof is omitted herein.

The player object controller 11 controls an operation of a player object corresponding to each of the client devices 20 and 201 to 20N based on user operation information received from each client device 20. For example, the user operates a gamepad provided in each of the client devices 20 and 201 to 20N to cause the player object to perform a motion such as walking, flying, or attacking. The user operation information includes identification information of the client device 20, and identification information of a selected operation, for example.

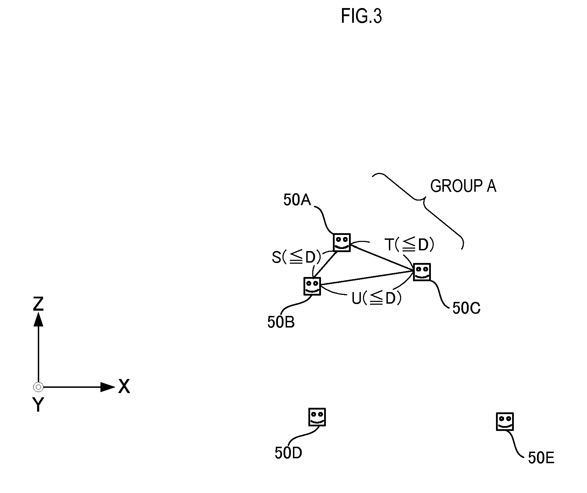

The group setter 12 sets player objects disposed within a predetermined distance D among player objects that are present in a three-dimensional virtual space as one group. Its description will be made with reference to Fig. 3, for example. Fig. 3 is a diagram illustrating a group setting process according to an embodiment of the present invention. Further, Fig. 3 shows a state where five player objects 50 (50A to 50E) are present when overlooking a part of the three-dimensional virtual space.

Among the respective player objects 50A to 50E, a distance S between the player objects 50A and 50B, a distance T between the player objects 50A and 50C, and a distance U between the player objects 50B and 50C are all equal to or shorter than the predetermined distance D. On the other hand, the player object 50D is disposed at a position longer than the predetermined distance D with respect to the player objects 50A to 50C and 50E. Further, the player object 50E is disposed at a longer distance similar to the player object 50D.

Accordingly, the player objects 50A to 50C disposed within the predetermined distance D are set as one group (for example, group A). The player objects 50 that belong to one group are excluded from a target of another group setting.

The common camera controller 13 arranges a common virtual camera for each group set by the group setter 12. The common virtual camera is used to generate the three-dimensional virtual space image (game image), similar to an individual virtual camera (which will be described later). Further, the common camera controller 13 determines a position (including an arrangement position and a direction) of the common virtual camera corresponding to the group so that the player objects 50 that belong to the group are included in an imaging range.

More specifically, the position of the common virtual camera corresponding to the group is determined based on each position of the player objects 50 that belong to the group. When plural groups are set, similarly, the position of the common virtual camera corresponding to each group is determined. Accordingly, the common virtual camera moves to follow movements of the player objects 50 that belong to the group.

The individual camera controller 14 arranges an individual virtual camera for each player object 50 that does not belong to the group. Further, the individual camera controller 14 determines a position of the individual virtual camera (including an arrangement position and a direction) corresponding to the player object 50 so that the player object 50 is included in an imaging range.

More specifically, the position of the individual virtual camera corresponding to the player object 50 is determined based on the position of the player object 50. When there are plural player objects 50 that do not belong to the group, similarly, the position of the individual virtual camera corresponding to each player object 50 is determined. Accordingly, the individual virtual camera moves to follow a movement of the single player object 50.

In Fig. 3, the common virtual camera is arranged for group A, and the individual virtual camera is arranged for each of the player objects 50D and 50E.

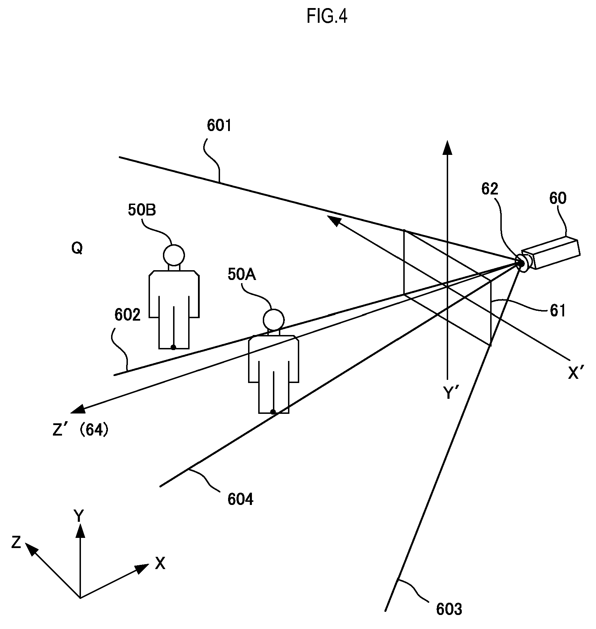

The image generator 15 generates the three-dimensional virtual space image captured by a common virtual camera and the individual virtual camera as a game image. Specific description thereof will be made with reference to Fig. 4. Fig. 4 is a diagram schematically illustrating a common virtual camera 60 and a virtual screen 61 arranged in a three-dimensional virtual space according to an embodiment of the present invention. Further, Fig. 4 shows a state where two player objects 50 (50A and 50B) are present in the three-dimensional virtual space.

The image generator 15 generates an image (two-dimensional image) obtained by projecting a three-dimensional virtual space onto the virtual screen 61 using the common virtual camera 60 as a viewpoint 62 by performing a known process such as perspective transformation. Further, the image generator 15 overlays an image such as a cursor on the generated image, for example, to generate a game image. The image generator 15 generates the game image in one frame unit. Since a technique relating to generation of the game image is known, the detailed description is omitted.

The above-mentioned virtual three-dimensional space is defined by a world coordinate system formed by X, Y, and Z axes. Further, a coordinate system used for projecting the three-dimensional virtual space onto the virtual screen 61 is defined by a viewpoint coordinate system formed by X', Y', and Z' axes using the viewpoint 62 as a reference.

The position of the common virtual camera 60 is the viewpoint 62, and the direction of the common virtual camera 60 is a visual axis 64. The visual axis 64 corresponds to the Z' axis in the viewpoint coordinate system, and is determined by the position of the common virtual camera 60 and a point of gaze (not shown). Further, a region formed by four straight lines 601 to 604 that connect the viewpoint 62 and vertexes of the virtual screen 61, and the virtual screen 61 becomes a visual range (imaging range) Q. The virtual screen 61 of this embodiment is arranged at a position of a predetermined distance from the viewpoint 62 on the visual axis 64. Further, in this embodiment, the size of the virtual screen 61 and the distance thereof from the viewpoint 62 are fixed.

With respect to the individual virtual camera, a game image is generated in a similar way to the above-mentioned common virtual camera 60.

Finally, information about the game image generated using the common virtual camera 60 by the image generator 15 is provided to each of the client devices 20 and 201 to 20N of the users who operate the player objects 50 that belong to the group corresponding to the common virtual camera 60. That is, information about the same game image is provided to the client devices 20 and 201 to 20N of the users who operate the player objects 50 that belong to the same group.

On the other hand, information about the game image generated using the individual virtual camera by the image generator 15 is provided to each of the client devices 20 and 201 to 20N of the users who operate the player objects 50 corresponding to the individual virtual camera. That is, information about the individual game image is provided to each of the client devices 20 and 201 to 20N of the users who operate the player objects 50 that do not belong to the group. The server device 10A provides information about the game image to each of the client devices 20, 201 to 20N based on identification information of the client devices 20 and 201 to 20N, for example.

Each of the plural client devices 20 and 201 to 20N is managed by a user who operates a video game, and is configured by a communication terminal capable of performing a network distribution type game, such as a stationary game console, a personal computer, a mobile phone terminal, a personal digital assistant (PDA), or a portable game console, for example.

Each of the plural client devices 20 and 201 to 20N is connected to the communication network 30, and includes hardware (for example, an operator such as a gamepad for operating a player object, a display that displays a game image, a sound output device, or the like) and software that executes a video game by performing communication with the video game processing server 10.

Next, an operation of the video game processing system 100 (system 100) of this embodiment will be described.

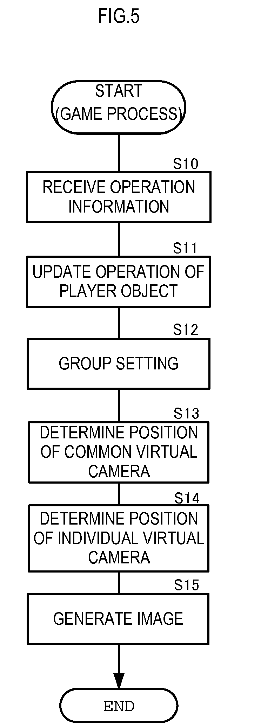

Fig. 5 is a flowchart illustrating an example of image processing (game process) executed by the system 100. In the game process according to this embodiment, a process of updating an operation of a player object and a process of generating a game image to be provided to each of the client devices 20 and 201 to 20N using a common virtual camera and an individual virtual camera are performed. The game process shown in Fig. 5 is executed by the server device 10A.

The game process is started as the server device 10A receives a start request of the game process from the client device 20.

First, the server device 10A receives user operation information from the client device 20 (step S10), and updates an operation of the player object 50 based on the received user information (step S11). For example, as described above, the server device 10A causes the player object 50 to execute an operation such as walking.

Then, the server device 10A sets a group of the player objects 50 (step S12). Thereafter, the server device 10A determines a new position of the common virtual camera 60 arranged for each group based on the positions of the player objects 50 that belong to the group (step S13).

Further, the server device 10A determines a new position of an individual virtual camera corresponding to each player object 50 based on the position of the player object 50 that does not belong to the group (step S14). Then, the server device 10A generates a game image using each virtual camera described as above (step S15), and terminates the process.

As described above, as one aspect of the first embodiment, since the video game processing server device 10A includes the player object controller 11, the group setter 12, the common camera controller 13, the individual camera controller 14, and the image generator 15, a virtual camera may not be individually set to each of all of the player objects 50 arranged in the three-dimensional virtual space to generate each game image, and thus, it is possible to reduce the load of an image generation process of the video game server device 10A.

In this embodiment, the player object 50 refers to an object capable of being operated by a user (that is, a user of a client device) among objects that are present in a three-dimensional virtual space of a video game, as described above. The concept of the player object 50 includes various objects capable of being an operational object of a user such as a character, an avatar or a combat plane. Further, any player object that becomes an opponent (enemy) or an ally of a certain player object 50 may be included in the player object 50 of this embodiment.

Further, in this embodiment, the image processing system of the video game is described, but the prevent invention is not limited thereto. For example, an image processing system that generates a three-dimensional virtual space different from a video game, such as a virtual world in which an avatar or the like possessed by a user acts to communicate with another avatar or a virtual store or the like in which purchasing of a virtual item is performed, may be used.

### [Second embodiment]

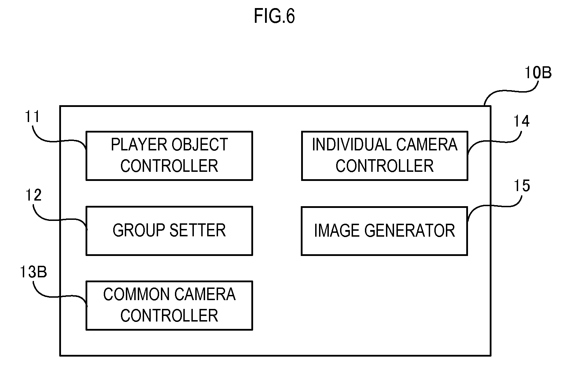

Fig. 6 is a block diagram illustrating a configuration of a video game processing server device 10B (server device 10B) which is an example of the video game processing server device 10. In this embodiment, the server device 10B at least includes a player object controller 11, a group setter 12, a common camera controller 13B, an individual camera controller 14, and an image generator 15.

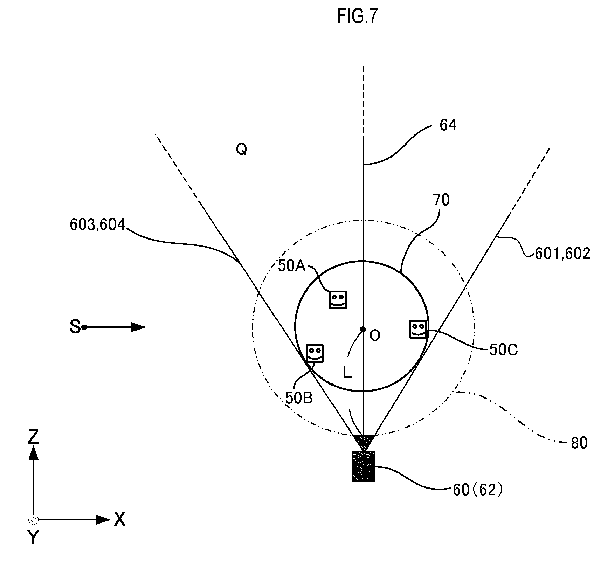

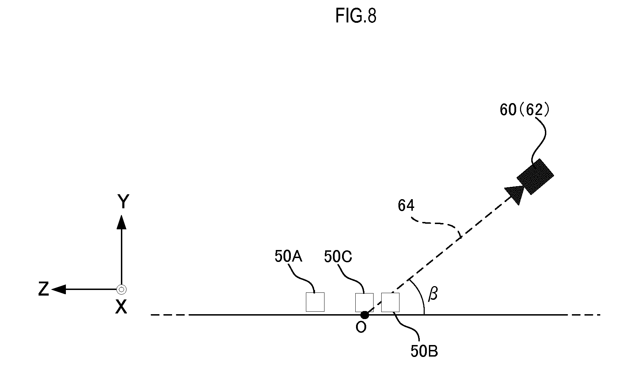

The common camera controller 13B calculates a region including all of player objects 50 that belong to a group based on positions of the player objects 50 that belong to a group. Further, the common camera controller 13B determines the position of a common virtual camera 60 so that the region is included in an imaging range of the common virtual camera 60 using the center of the region as a point of gaze. Its description will be made with reference to Figs. 7 and 8, for example.

Fig. 7 is a diagram illustrating a positioning process of the common virtual camera 60 according to an embodiment of the present invention. Further, Fig. 7 shows a state where three player objects 50 (50A to 50C) that belong to the group are present when overlooking a part of the three-dimensional virtual space. Fig. 8 shows a state where the three-dimensional virtual space shown in Fig. 7 is viewed in an arrow direction from a spot S.

The common camera controller 13B calculates a region 70 where the player objects 50A to 50C are included based on positions of the player objects 50A to 50C. The region 70 is a circular region, for example. Further, the common camera controller 13B sets a central point O of the region 70 as a point of gaze.

Further, the common camera controller 13B calculates positions where four straight lines 601 to 604 that form an imaging range Q are in contact with the region 70. Here, as shown in Fig. 8, in this embodiment, a value of an angle β between an XZ plane and a visual axis 64 is constant, and angles of the straight lines 601 to 604 with respect to the visual axis 64 are also constant. Accordingly, a length L of the visual axis 64 in a state where the straight lines 601 to 604 are in contact with the region 70 is calculated. That is, the common virtual camera 60 may be arranged at any position on the circumstance of a circle 80 having the central point O as its center and having a radius of the length L, so that the straight lines 601 to 604 are in contact with the region 70.

Accordingly, the common camera controller 13B may set any position on the circumference of the circle 80 as a new position of the common virtual camera 60. For example, any position on the circumference of the circle 80 may be randomly extracted (determined). Alternatively, a position which is closest to a previous position of the common virtual camera 60 may be set as a new position. In this case, a movement amount of the common virtual camera 60 becomes small, and a change amount of the game image also becomes small.

Further, for example, a position where the player objects 50 that belong to the group do not overlap each other in the game image may be set as a new position of the common virtual camera 60. In determining whether the player objects 50 overlap each other, for example, if one player object 50 is not present on a straight line extended from the common virtual camera 60 to another player object 50, it is determined that the player objects 50 do not overlap each other.

Since it is a typical technique to calculate the region 70 or the like by the server device 10B, detailed description thereof will be omitted.

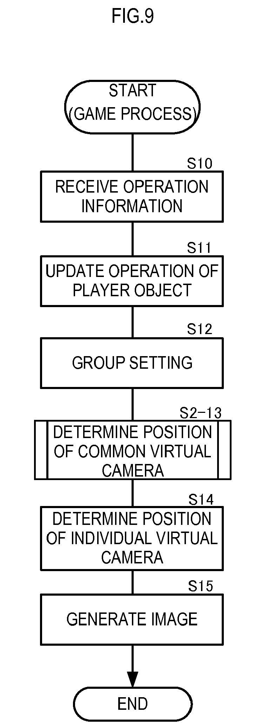

Fig. 9 is a flowchart illustrating an example of a game process executed by a system 100. Only configurations different from those described in Fig. 5 will be described.

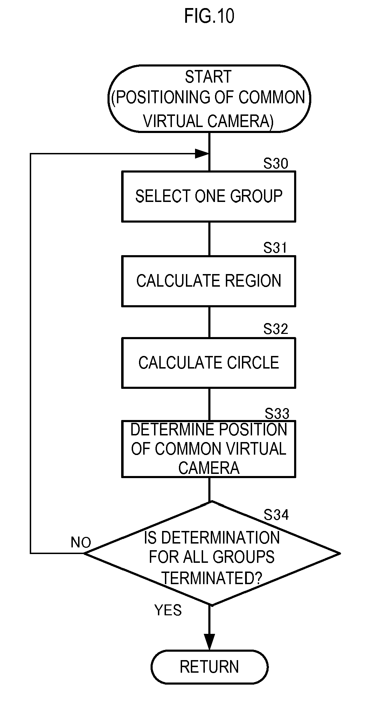

The server device 10B executes processes of the steps S10 to S12, and then, executes a positioning process of the common virtual camera 60 arranged for each group, by executing a calculation process of the region 70 based on the positions of the player objects 50 that belong to the group, and other processes, as described above (step S2-13). Specific description thereof will be made with reference to Fig. 10. Fig. 10 is a flowchart illustrating an example of a positioning process of a common virtual camera according to an embodiment of the present invention.

The server device 10B selects one of groups which are set (step S30). Then, as described above, the server device 10B calculates the region 70 based on the positions of the player objects 50 that belong to the selected group (step S31). Thereafter, as described above, the server device 10B calculates the circle 80 based on the region 70 (step S32), and determines a new position of the common virtual camera 60 (step S33). Then, the server device 10B repeatedly executes the above-described processes of steps S30 to S33 until new positions of the common virtual cameras 60 of all the set groups are determined (step S34: YES).

When the positioning of all the common virtual cameras 60 is terminated (step S34: YES), the server device 10B terminates the process (step S2-13), and executes processes of steps S14 and S15 to terminate the game process.

As described above, as an aspect of the second embodiment, since the video game processing server device 10B includes the player object controller 11, the group setter 12, the common camera controller 13B, the individual camera controller 14, and the image generator 15, it is possible to determine the position of the common virtual camera 60 by a simple process, and to suppress increase in a processing failure of the server device 10B.

### [Third embodiment]

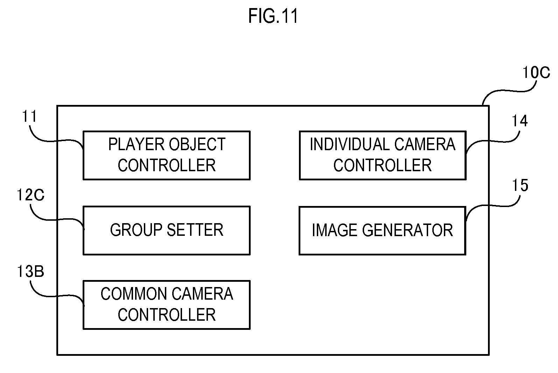

Fig. 11 is a block diagram illustrating a configuration of a video game processing server device 10C (server device 10C) which is an example of the video game processing server device 10. In this embodiment, the server device 10C at least includes a player object controller 11, a group setter 12C, a common camera controller 13B, an individual camera controller 14, and an image generator 15.

When a region 70 calculated by the common camera controller 13B is larger than a predetermined size, the group setter 12C releases group setting. The common camera controller 13B of this embodiment is the same as the common camera controller 13B of the second embodiment.

In this embodiment, similar to the second embodiment, as shown in Fig. 7, the region 70 is calculated, and the position of the common virtual camera 60 is determined so that the region 70 is included in an imaging range Q. As described above, the region 70 is calculated based on positions of player objects 50 that belong to a group. Accordingly, the region 70 has a size and position that varies according to the positions of the player objects 50.

Further, the group setter 12C releases the group setting when the calculated region 70 is larger than the predetermined size. For example, if the player objects 50 are separated from each other, the region 70 becomes large. If the region 70 becomes large, the common virtual camera 60 is arranged at a position distantly separated from a point of gaze, that is, a further backward position so that the region 70 is included in the imaging range Q.

Here, the release of the group setting is performed since if the region 70 becomes large, the player objects 50 included in the game image become very small in size, so that it is difficult for a user to visually recognize the objects. A predetermined size for the release of the group setting may be any size which is larger than that of the region 70 calculated by player objects 50 of which a mutual distance is a predetermined distance D.

If a player object 50 that belonged to the group of which the setting was released is later set into a different group, the player object 50 is imaged by a common virtual camera 60 for the different group. Alternatively, if the player object 50 is not set into any group, the player object 50 is imaged by an individual virtual camera.

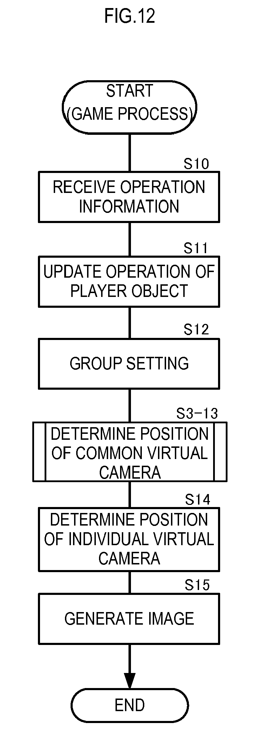

Fig. 12 is a flowchart illustrating an example of a game process executed by a system 100. Only configurations different from those described in Fig. 9 will be described.

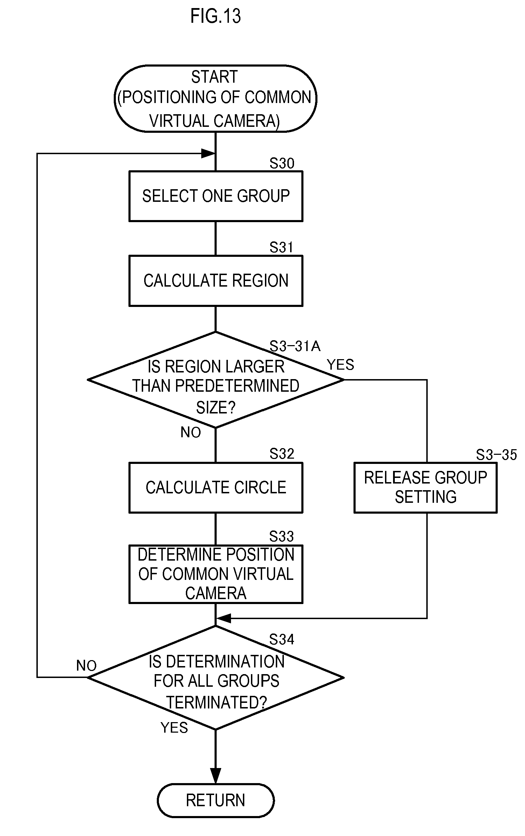

The server device 10C executes processes of steps S10 to S12, and then, executes a positioning process of the common virtual camera 60 arranged for each group, by executing a calculation process of the region 70 based on the positions of the player objects 50 that belong to the group, and other processes, as described above (step S3-13). Further, in the process of step S3-13, when the calculated region 70 is larger than a predetermined size, a process of releasing group setting is further executed. Specific description thereof will be made with reference to Fig. 13. Fig. 13 is a flowchart illustrating an example of a positioning process of a common virtual camera according to an embodiment of the present invention. Only configurations different from those described in Fig. 10 will be described.

The server device 10C executes processes of steps S30 and S31, and then, determines whether the calculated region 70 is larger than the predetermined size (step S3-31A). When it is determined that the region 70 is equal to or smaller than the predetermined size (step S3-31A: NO), the server device 10C executes steps S32 to S34. On the other hand, when it is determined that the region 70 is larger than the predetermined size (step S3-31A: YES), the server device 10C releases the group setting (step S3-35), and the procedure proceeds to a process of step S34.

Further, the server device 10C executes the process of step S3-13, and then, executes processes of steps S14 and S15 to terminate the game process.

As described above, as an aspect of the third embodiment, since the video game processing server device 10C includes the player object controller 11, the group setter 12C, the common camera controller 13B, the individual camera controller 14, and the image generator 15, it is possible to enhance visibility of a game image.

### [Fourth embodiment]

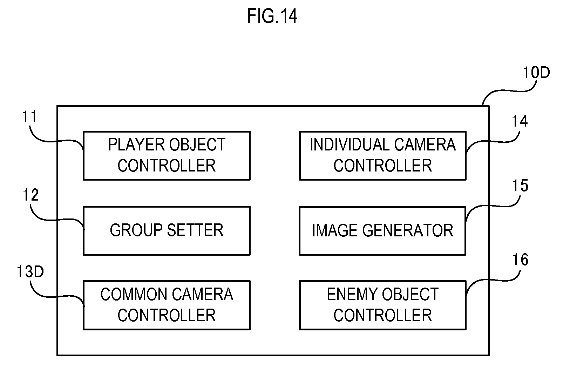

Fig. 14 is a block diagram illustrating a configuration of a video game processing server device 10D (server device 10D) which is an example of the video game processing server device 10. In this embodiment, the server device 10D at least includes a player object controller 11, a group setter 12, a common camera controller 13D, an individual camera controller 14, an image generator 15, and an enemy object controller 16.

The enemy object controller 16 generates an enemy object that fights with a player object 50 in a three-dimensional virtual space, and controls an operation of the enemy object. The enemy object is an object that performs an operation such as an attack with respect to the player object 50, which is a so-called a non-player object. In this embodiment, since the control of the operation of the enemy object is a general technique, detailed description thereof will be omitted.

The common camera controller 13D determines the position of the common virtual camera 60 based on the position of the enemy object, in addition to the positions of the player objects 50 that belong to a group. For example, the position of the common virtual camera 60 is determined so that as many enemy objects as possible are included in an imaging range Q, in addition to the player objects 50 that belong to the group.

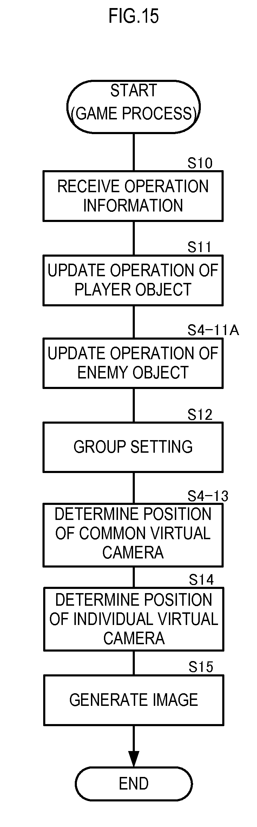

Fig. 15 is a flowchart illustrating an example of a game process executed by a system 100. Only configurations different from those described in Fig. 5 will be described.

The server device 10D executes processes of steps S10 and S11, and then, updates an operation of an enemy object (step S4-11A). For example, as described above, the server device 10D causes the enemy object to execute an operation such as an attack with respect to the player object 50.

Then, the server device 10D executes a process of step S12, and determines a new position of a common virtual camera arranged for each group (step S4-13). Here, as described above, the server device 10D determines the position of the common virtual camera 60 based on the position of the enemy object in addition to the position of the player object 50 that belongs to the group. Then, the server device 10D executes processes of steps S14 and S15, and terminates the game process.

As described above, as an aspect of the fourth embodiment, since the video game processing server device 10D at least includes the player object controller 11, the group setter 12, the common camera controller 13D, the individual camera controller 14, the image generator 15, and the enemy object controller 16, it is possible to determine the position of the common virtual camera 60 in consideration of the position of the enemy object, and thus, it is possible to enhance visibility of the game image.

### [Fifth embodiment]

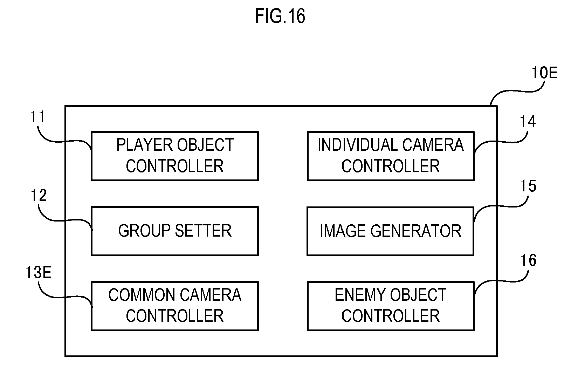

Fig. 16 is a block diagram illustrating a configuration of a video game processing server device 10E (server device 10E) which is an example of the video game processing server device 10. In this embodiment, the server device 10E at least includes a player object controller 11, a group setter 12, a common camera controller 13E, an individual camera controller 14, an image generator 15, and an enemy object controller 16.

The enemy object controller 16 generates an enemy object that fights with a player object 50 in the three-dimensional virtual space, similar to the enemy object controller 16 of the fourth embodiment, and controls an operation of the enemy object.

The common camera controller 13E calculates a region 70 including all the player objects 50 that belong to a group based on the positions of the player objects 50 that belong to a group, similar to the common camera controller 13B of the second embodiment. Further, the common camera controller 13E calculates a circle 80 based on the region 70. In addition, which position on the circumference of the circle 80 is set as the position of the common virtual camera 60 is determined based on the position of the enemy object.

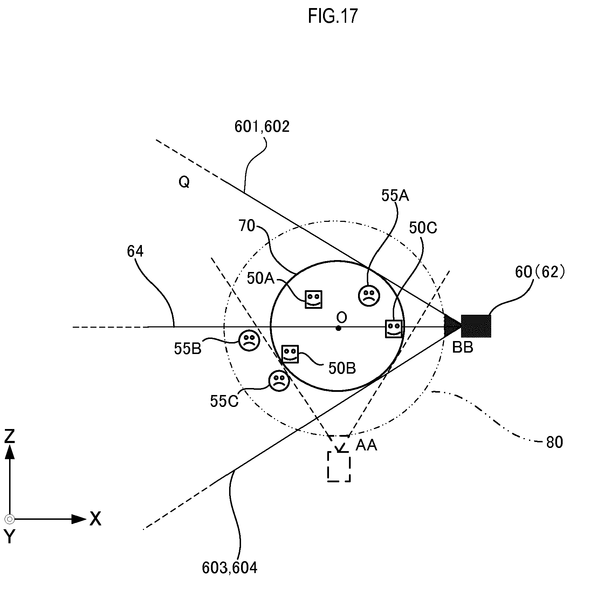

For example, as shown in Fig. 17, a position where a largest number of enemy objects are included in the imaging range Q among two predetermined locations on the circumference of the circle 80 is determined as the position of the common virtual camera 60. Fig. 17 is a diagram illustrating a positioning process of the common virtual camera 60 according to an embodiment of the present invention. Further, Fig. 17 shows a state where two player objects 50 (50A and 50B) that belong to a group and three enemy objects 55 (55A to 55C) are present when overlooking a part of the three-dimensional virtual space.

In the example shown in Fig. 17, the common camera controller 13E determines the number of an enemy object 55 included in an imaging range Q when the common virtual camera 60 is arranged at an arbitrary position AA on the circumference of the circle 80 and at a position BB which is rotated by an angle of 90° from the position AA. When the common virtual camera 60 is arranged at the position AA, only one enemy object 55A is included in the imaging range Q. On the other hand, when the common virtual camera 60 is arranged at the position BB, three enemy objects 55A to 55C are included in the imaging range Q.

Accordingly, the common camera controller 13E determines the position BB as a new position of the common virtual camera 60. The number of positions to be determined is not limited to two, and the determination may be performed at various positions on the circumference of the circle 80, for example. Further, the rotational angle between two positions AA and BB is 90°, but may be an angle other than 90°.

Further, the arbitrary position AA is set, but the present invention is not particularly limited thereto. For example, plural positions where the player objects 50 that belong to the group do not overlap each other in a game image may be extracted, and a position where a largest number of enemy objects 55 are included among the extracted positions may be determined as a new position of the common virtual camera 60.

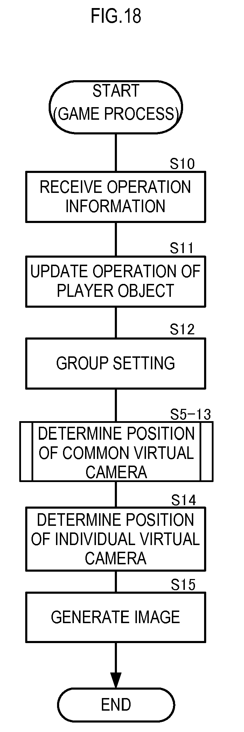

Fig. 18 is a flowchart illustrating an example of a game process executed by a system 100. Only configurations different from those described in Fig. 15 will be described.

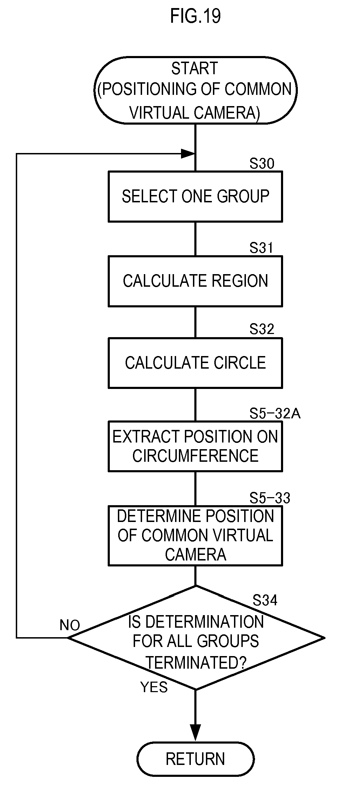

The server device 10E executes processes of step S10 to S12, and then, executes a positioning process of the common virtual camera 60 arranged for each group, by executing a calculation process of the region 70, and other processes, as described above (step S5-13). Specific description thereof will be made with reference to Fig. 19. Fig. 19 is a flowchart illustrating an example of a positioning process of a common virtual camera according to an embodiment of the present invention. Only configurations different from those described in Fig. 10 will be described.

The server device 10E executes processes of steps S30 to S32 to calculate the region 70 and the circle 80. Then, the server device 10E extracts the arbitrary position of the circle 80, as described above (step S5-32A). Further, the server device 10E determines a position where a largest number of enemy objects 55 are included in the imaging range Q among the extracted positions, which is the arbitrary position, as a new position of the common virtual camera 60 (S5-33). Then, the server device 10E causes the procedure to proceed to a process of step S34.

Further, the server device 10E executes the process of step S5-13, and then, executes the processes of steps S14 and S15 to then terminate the game process.

As described above, as an aspect of the fifth embodiment, since the video game processing server device 10E includes the player object controller 11, the group setter 12, the common camera controller 13E, the individual camera controller 14, the image generator 15, and the enemy object controller 16, it is possible to determine the position of the common virtual camera 60 in consideration of the position of the enemy object 55, and thus, it is possible to enhance visibility of a game image.

### [Sixth embodiment]

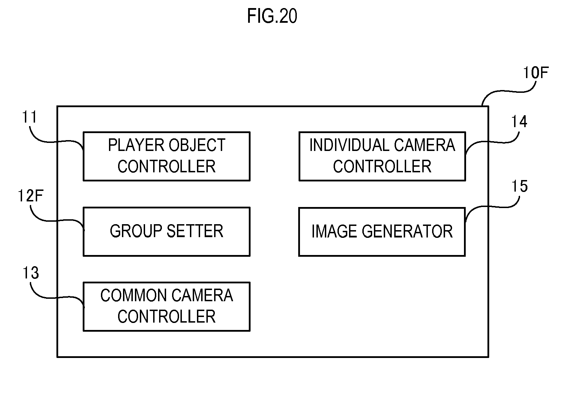

Fig. 20 is a block diagram illustrating a configuration of a video game processing server device 10F (server device 10F) which is an example of the video game processing server device 10. In this embodiment, the server device 10F at least includes a player object controller 11, a group setter 12F, a common camera controller 13, an individual camera controller 14, and an image generator 15.

The group setter 12F releases, when a positional relationship of player objects 50 that belong to a group satisfies a predetermined release condition, group setting. For example, a condition where a mutual distance of the player objects 50 that belong to the group is equal to or longer than a release distance D' which is longer than a predetermined distance D may be set as the predetermined release condition. That is, the predetermined release condition may be set so that the group setting is released, for example, when the player objects 50 set in the group become distant from each other and it is thus difficult to visually recognize the player objects 50 included in a game image if the group setting is maintained.

If a player object 50 that belonged to the group of which the setting was released is later set into a different group, the player object 50 is imaged by a common virtual camera 60 for the different group. Alternatively, if the player object 50 is not set into any group, the player object 50 is imaged by an individual virtual camera.

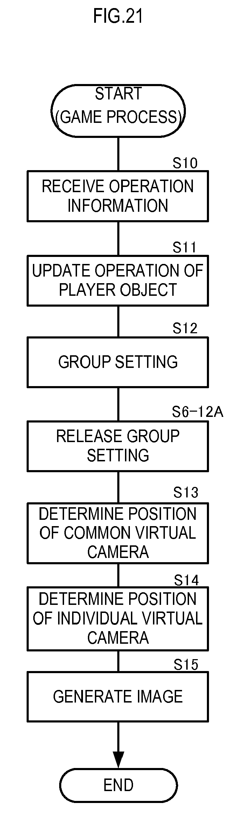

Fig. 21 is a flowchart illustrating an example of a game process executed by a system 100. Only configurations different from those described in Fig. 5 will be described.

The server device 10F executes processes of steps S10 to S12, and then, releases group setting when a predetermined release condition is released, as described above (step S6-12A) . The server device 10F determines whether the predetermined condition is satisfied with respect to each of the set groups, and releases the group setting when the predetermined condition is satisfied. Further, the server device 10F executes processes of step S13 to S15, and terminates the game process.

As described above, as an aspect of the sixth embodiment, since the video game processing server device 10F at least includes the player object controller 11, the group setter 12F, the common camera controller 13, the individual camera controller 14, and the image generator 15, it is possible to enhance visibility of a game image.

### [Seventh embodiment]

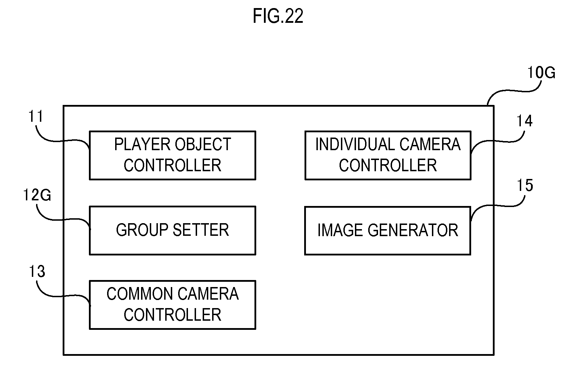

Fig. 22 is a block diagram illustrating a configuration of a video game processing server device 10G (server device 10G) which is an example of the video game processing server device 10. In this embodiment, the server device 10G at least includes a player object controller 11, a group setter 12G, a common camera controller 13, an individual camera controller 14, and an image generator 15.

The group setter 12G releases, when distances between a specific player object 50 that belongs to a group and all other player objects 50 that belong to the group are equal to or longer than a predetermined release distance D", the group setting of the specific player object 50. The predetermined release distance D" is longer than a predetermined distance D.

For example, it is assumed that three player objects 50A to 50C belong to a group and distances between the player object 50A and the other player objects 50B and 50C are equal to or longer than the predetermined release distance D''. On the other hand, it is assumed that a distance between the player object 50B and the player object 50C is shorter than the predetermined release distance D". In the case of this example, only the player object 50A is released from the group.

If the player object 50 released from the group is later set into a different group, the player object 50 is imaged by a common virtual camera 60 for the different group. Alternatively, if the player object 50 is not set into any group, the player object 50 is imaged by an individual virtual camera.

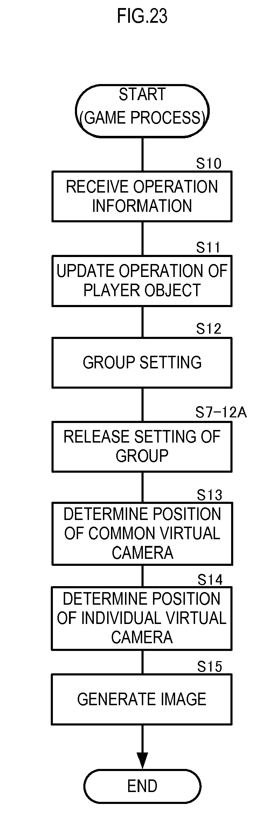

Fig. 23 is a flowchart illustrating an example of a game process executed by a system 100. Only configurations different from those described in Fig. 5 will be described.

The server device 10G executes processes of steps S10 to S12, and then, performs a process of releasing setting of a group to which the player object 50 belongs, as described above (step S7-12A). The server device 10G performs the above-described determination with respect to each of the player objects 50 that belong to each group. Further, the server device 10G releases the player object 50 determined to be released, from the group to which the player object 50 belongs. Then, the server device 10G executes processes of steps S13 to S15, and then, terminates the game process.

As described above, as an aspect of the seventh embodiment, since the video game processing server device 10G at least includes the player object controller 11, the group setter 12G, the common camera controller 13, the individual camera controller 14, and the image generator 15, it is possible to release only a player object 50 which is distantly separated from a group, and to enhance visibility of the game image.

### [Eighth embodiment]

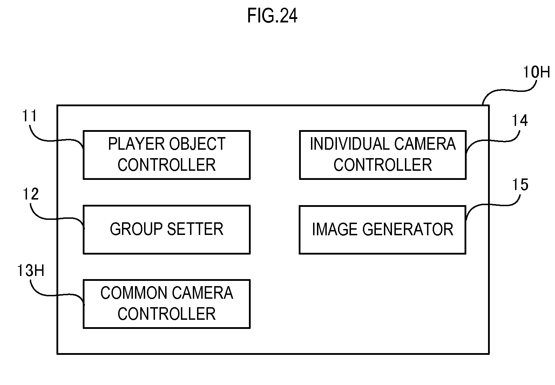

Fig. 24 is a block diagram illustrating a configuration of a video game processing server device 10H (server device 10H) which is an example of the video game processing server device 10. In this embodiment, the server device 10H at least includes a player object controller 11, a group setter 12, a common camera controller 13H, an individual camera controller 14, and an image generator 15.

The common camera controller 13H calculates a region 70 including all player objects 50 based on positions of the player objects 50 that belong to a group, similar to the common camera controller 13B of the second embodiment. Further, the common camera controller 13H calculates a circle 80 based on the region 70, and determines the position of a common virtual camera 50. Here, the common camera controller 13H determines the position of the common virtual camera 60 so that a distance L between a point of gaze (central point O) and the common virtual camera 60 is equal to or longer than a minimum distance LL.

For example, if the player objects 50 that belong to the group are approaching each other, the region 70 becomes small. Then, since the common virtual camera 60 is also arranged at a position close to the player objects 50, the player objects 50 are excessively largely drawn in the game image. Accordingly, it is difficult to visually recognize a peripheral situation such as an enemy object 55.

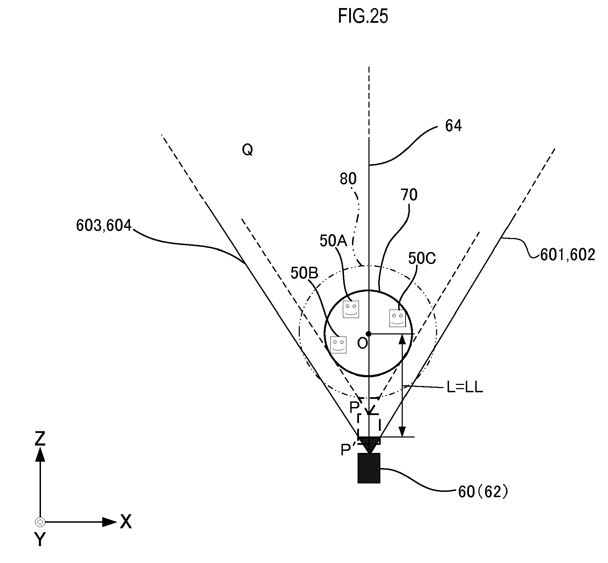

Specific description thereof will be made with reference to Fig. 25. Fig. 25 is a diagram illustrating a positioning process of the common virtual camera 60 according to an embodiment of the present invention. Further, Fig. 25 shows a state where three player objects 50 (50A to 50C) that belong to a group are present when overlooking a part of the three-dimensional virtual space.

The common camera controller 13H calculates the region 70 and the circle 80 based on positions of the player objects 50A to 50C in Fig. 25, and calculates a new position P (candidate position) of the common virtual camera 60. However, the distance L between the position P and the central point O is shorter than the minimum distance LL. Accordingly, the common camera controller 13H does not set the position P as the position of the common virtual camera 60, and determines a position P', extended from the candidate position, where the distance L from the central point O through the position P (distance on a visual axis 64) becomes the minimum distance LL, as the position of the common virtual camera 60. The minimum distance LL may be set as a distance where a peripheral situation is easily visually recognized.

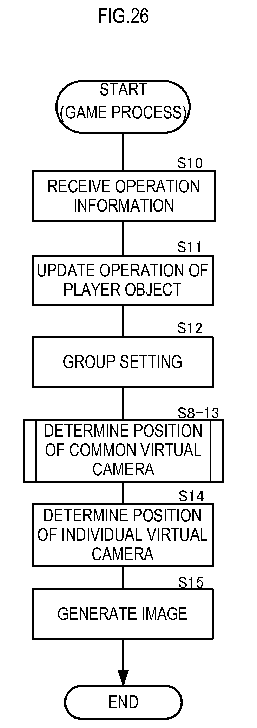

Fig. 26 is a flowchart illustrating an example of a game process executed by a system 100. Only configurations different from those described in Fig. 5 will be described.

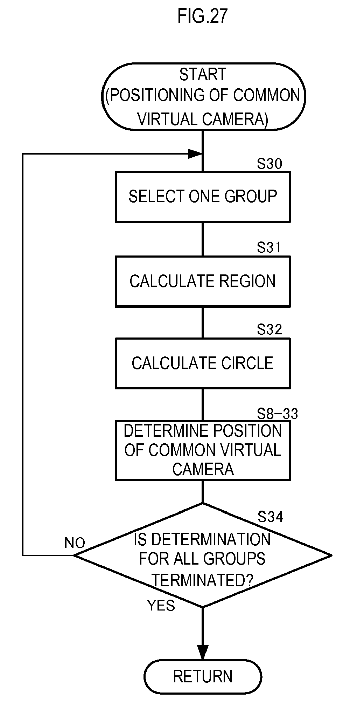

The server device 10H executes processes of steps S10 to S12, and then, executes a positioning process of the common virtual camera 60 arranged for each group, by executing a calculation process of the region 70 based on the positions of the player objects that belong to the group, and other processes, as described above (step S8-13). Specific description thereof will be made with reference to Fig. 27. Fig. 27 is a flowchart illustrating an example of a positioning process of a common virtual camera according to an embodiment of the present invention. Only configurations different from those described in Fig. 10 will be described.

The server device 10H executes processes of steps S30 to S32, and determines a new position of the common virtual camera 60 (step S8-33). The server device 10H calculates a candidate position of the common virtual camera 60, as described above, and determines, if the distance L at the candidate position is equal to or longer than the minimum distance LL, the candidate position as a new position of the common virtual camera 60. Further, if the distance L is shorter than the minimum distance LL, the server device 10H determines a position, extended from the candidate position, where the distance L from the central point O becomes the minimum distance LL as a new position of the common virtual camera 60.

Then, the server device 10H executes processes of steps S14 and S15, and terminates the game process.

As described above, as an aspect of the eighth embodiment, since the video game processing server device 10H at least includes the player object controller 11, the group setter 12, the common camera controller 13H, the individual camera controller 14, and the image generator 15, it is possible to enhance visibility of a game image.

### [Ninth embodiment]

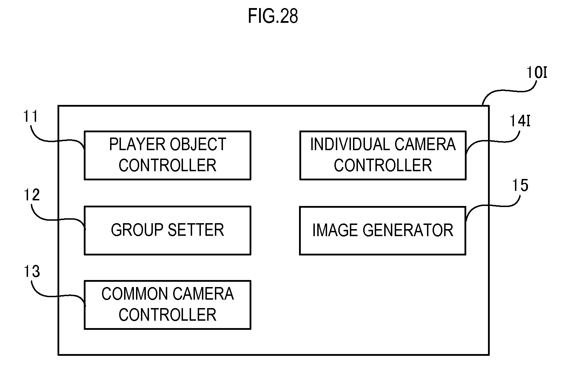

Fig. 28 is a block diagram illustrating a configuration of a video game processing server device 10I (server device 10I) which is an example of the video game processing server device 10. In this embodiment, the server device 10I at least includes a player object controller 11, a group setter 12, a common camera controller 13, an individual camera controller 14I, and an image generator 15.

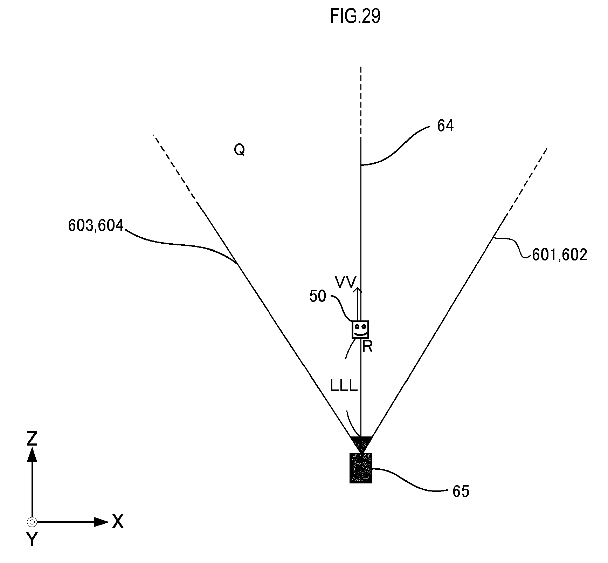

The individual camera controller 14I sets a position of a disposed player object 50 as a point of gaze, and determines a position of a predetermined distance LLL from the point of gaze as a position of an individual virtual camera. Further, the individual virtual camera is set to be arranged at an upper position on a back side of the player object 50. Specific description thereof will be made with reference to Fig. 29.

Fig. 29 is a diagram illustrating a positioning process of an individual virtual camera 65 according to an embodiment of the present invention. Further, Fig. 29 shows a state where a player object 50 that does not belong to a group is present when overlooking a part of a three-dimensional virtual space.

As shown in Fig. 29, the position of the player object 50 is set as a point of gaze R, the position of the individual virtual camera 65 is determined as a position where a distance from the point of gaze R is the predetermined distance LLL on a line segment (visual axis 64) extended in a direction opposite to a direction VV of the player object 50 from the point of gaze R.

The direction VV of the player object 50 is a direction in which a front side of the player object is directed, for example, and is set in advance as a parameter relating to the player object. Further, a value of an angle β between the visual axis 64 and an XZ plane is constantly set so that the individual virtual camera 65 is arranged at the upper position on the back side of the player object 50. Thus, the back side of the player object is drawn in a game image by the individual virtual camera 65.

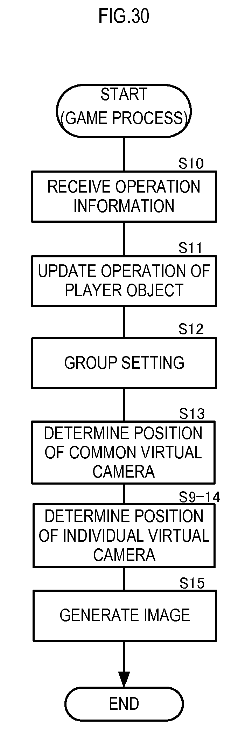

Fig. 30 is a flowchart illustrating an example of a game process executed by a system 100. Only configurations different from those described in Fig. 5 will be described.

The server device 10I executes processes of steps S10 to S13, and determines an upper position on back side of the player object 50 as a new position of the individual virtual camera 65, as described above (step S9-14). Further, the server device 10I executes a process of step S15, and terminates the game process.

As described above, as an aspect of the ninth embodiment, since the video game processing server device 10I includes the player object controller 11, the group setter 12, the common camera controller 13, the individual camera controller 14I, and the image generator 15, it is possible to determine the position of the individual virtual camera 65 by a simple process.

### [Tenth embodiment]

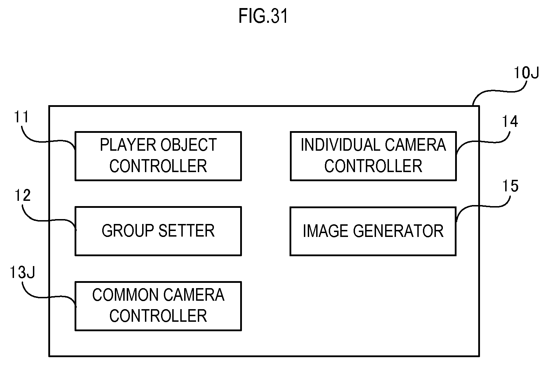

Fig. 31 is a block diagram illustrating a configuration of a video game processing server device 10J (server device 10J) which is an example of the video game processing server device 10. In this embodiment, the server device 10J at least includes a player object controller 11, a group setter 12, a common camera controller 13J, an individual camera controller 14, and an image generator 15.

The common camera controller 13J selects one player object 50 among player objects 50 that belong to a group. Then, the common camera controller 13J calculates, based on positions of the remaining player objects 50 excluding the selected player object 50, a first region at least including all of the remaining player objects 50. Then, the common camera controller 13J calculates a second region including the selected player object 50 and the first region based on a positional relationship between the selected player object 50 and the first region.

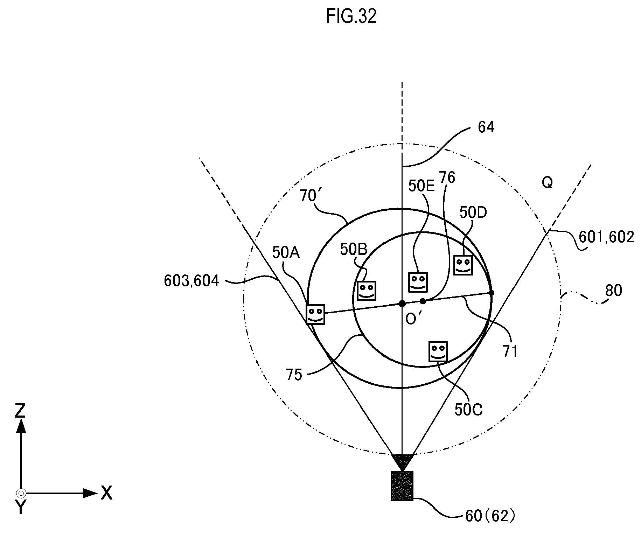

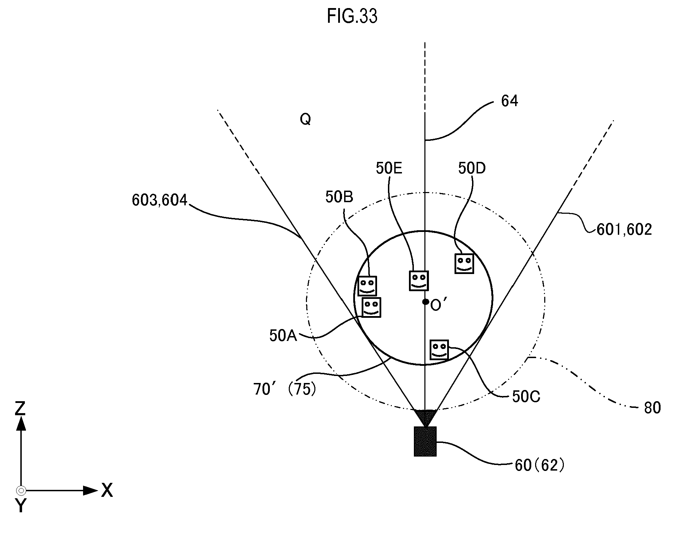

The second region corresponds to the region 70 of the second embodiment. Accordingly, the common camera controller 13J calculates a circle 80 based on the second region to determine a new position of a common virtual camera 60, similar to the second embodiment. Its description will be made with reference to Figs. 32 and 33, for example.

Figs. 32 and 33 are diagrams illustrating a positioning process of the common virtual camera 60 according to an embodiment of the present invention. Figs. 32 and 33 show a state where five player objects 50 (50A to 50E) which are grouped are present when overlooking a part of the three-dimensional virtual space.

In Fig. 32, the common camera controller 13J randomly selects one player object 50A, for example, among the player objects 50 that belong to a group. Further, the common camera controller 13J calculates, based on positions of the player objects 50B to 50E excluding the player object 50A, a first region 75 at least including the player objects 50B to 50E.

Then, the common camera controller 13J calculates a second region 70' including the player object 50A and the first region 75. For example, a region where a line segment 71 extended from the position of the player object 50A to a point that intersects the first region 75 passing through a central point 76 is a diameter is set as the second region 70'. Further, the circle 80 is calculated so that the second region 70' is included in an imaging range Q, similar to the second embodiment, and the position of the common virtual camera 60 is determined.

Further, as shown in Fig. 33, when the selected player object 50A is included in the first region 75, the common camera controller 13J sets the first region 75 as the second region 70' . Here, one player object 50 selected by the common camera controller 13J may be any player object that belongs to the group.

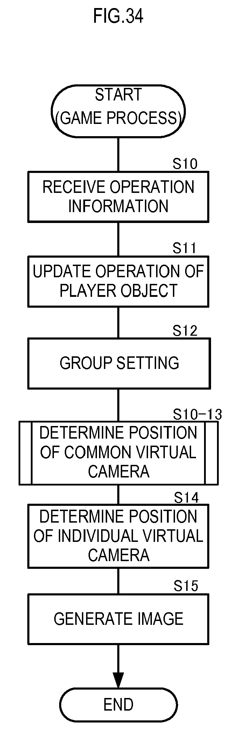

Fig. 34 is a flowchart illustrating an example of a game process executed by a system 100. Only configurations different from those described in Fig. 5 will be described.

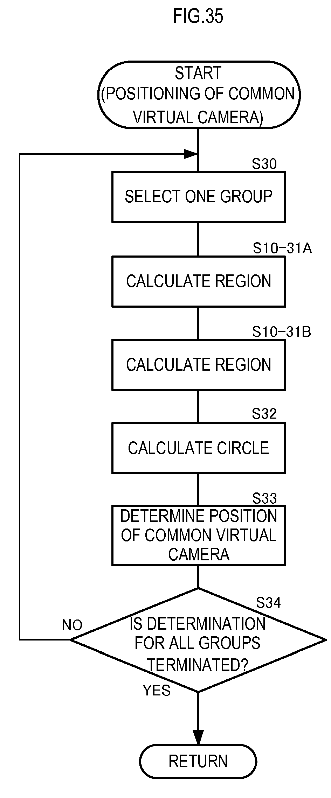

The server device 10J executes processes of steps S10 to S12, and then, executes a positioning process of the common virtual camera 60 arranged for each group, by executing a calculation process of the first region 75 and the second region 70', and other processes, as described above (step S10-13). Specific description thereof will be made with reference to Fig. 35. Fig. 35 is a flowchart illustrating an example of a positioning process of a common virtual camera according to an embodiment of the present invention. Only configurations different from those described in Fig. 10 will be described.

The server device 10J selects one group in a process of step S30, selects one player object 50 as described above, and then, calculates the first region 75 (step S10-31A). Then, the server device 10J calculates the second region 70' as described above (step S10-31B). The server device 10J calculates the second region 70' from the selected player object 50 and the first region 75 when the selected player object 50 is out of the first region 75. On the other hand, when the selected player object 50 is in the first region 75, the server device 10J sets the first region 75 as the second region 70'.

Then, the server device 10J executes processes of steps S32 to S34. Thereafter, the server device 10J executes processes of steps S14 and S15, and terminates the game process.

As described above, as an aspect of the tenth embodiment, since the video game processing server device 10J includes the player object controller 11, the group setter 12, the common camera controller 13J, the individual camera controller 14, and the image generator 15, it is possible to determine the position of the common virtual camera 60 by a simple process, and to suppress increase in a processing failure of the server device 10J.

### [Appendix]

In the above description, the embodiments have been described so that at least the following inventions can be realized by those skilled in the art.
[1] An image processing program causing a computer device which is a server device that is connected to communicate with one or more client devices, generates a player object operated by a user of each client device in a common three-dimensional virtual space, and generates an image in the three-dimensional virtual space to function as:
   a player object controller that controls an operation of a player object corresponding to each client device based on user operation information received from each client device;
   a group setter that sets player objects within a predetermined distance among the player objects as one group;
   a common camera controller that arranges a common virtual camera for each group, and determining a position of the common virtual camera so that player objects that belong to a group corresponding to the common virtual camera are included in an imaging range, based on positions of the player objects that belong to the group;
   an individual camera controller that arranges an individual virtual camera for each player object that does not belong to the group, and determining a position of the individual virtual camera so that a player object corresponding to the individual virtual camera is included in an imaging range, based on a position of the player object; and
   an image generator that generates a three-dimensional virtual space image, captured by the common virtual camera, to be transmitted to a client device corresponding to each of the player objects that belong to the group, and generating a three-dimensional virtual space image, captured by the individual virtual camera, to be transmitted to a client device corresponding to each player object that does not belong to the group.
[2] The image processing program according to [1],
   wherein the common camera controller calculates a region including all of the player objects that belong to the group based on positions of the player objects that belong to the group, and determines the position of the common virtual camera so that the region is included in an imaging range of the common virtual camera using the center of the region as a point of gaze.
[3] The image processing program according to [2],
   wherein the group setter releases the group setting when the region calculated by the common camera controller is larger than a predetermined size.
[4] The image processing program according to any one of [1] to [3],
   wherein the image processing program causes the computer device to further function as:
   an enemy object controller that generates an enemy object that fights with the player object in the three-dimensional virtual space and controlling an operation of the enemy object,
   wherein the common camera controller determines the position of the common virtual camera based on a position of the enemy object in addition to the positions of the player objects that belong to the group.
[5] The image processing program according to any one of [1] to [4],
   wherein the group setter releases the group setting when a positional relationship of the player objects that belong to the group satisfies a predetermined release condition.
[6] The image processing program according to any one of [1] to [5],
   wherein the group setter releases, when distances between a specific player object that belongs to the group and all the other player objects that belong to the group are equal to or longer than a predetermined release distance which is longer than a predetermined distance, the specific player object from the group.
[7] The image processing program according to [2],
   wherein the common camera controller determines the position of the common virtual camera so that a distance between the center of the region which is the point of gaze and the common virtual camera is equal to or longer than a predetermined minimum distance.
[8] A server device in which the image processing program according to any one of [1] to [7] is installed.
[9] An image processing system that includes a client device and a server device that are connected to each other through a communication network, generates a player object operated by a user of each client device in a common three-dimensional virtual space, and generates an image in the three-dimensional virtual space,
   the server device including:
   a player object controller that controls an operation of a player object corresponding to each client device based on user operation information received from each client device;
   a group setter that sets player objects within a predetermined distance among the player objects as one group;
   a common camera controller that arranges a common virtual camera for each group, and determining a position of the common virtual camera so that player objects that belong to a group corresponding to the common virtual camera are included in an imaging range, based on positions of the player objects that belong to the group;
   an individual camera controller that arranges an individual virtual camera for each player object that does not belong to the group, and determining a position of the individual virtual camera so that a player object corresponding to the individual virtual camera is included in an imaging range, based on a position of the player object; and
   an image generator that generates a three-dimensional virtual space image, captured by the common virtual camera, to be transmitted to a client device corresponding to each of the player objects that belong to the group, and generating a three-dimensional virtual space image, captured by the individual virtual camera, to be transmitted to a client device corresponding to each player object that does not belong to the group.
[10] The image processing system according to [9],
   wherein the client device includes a display controller that receives information about the two-dimensional image generated by the image generator from the server device and displays the received information on a display.
[11] An image processing method executed by a server device that is connected to communicate with one or more client devices, generates a player object operated by a user of each client device in a three-dimensional virtual space, and generates an image in the three-dimensional virtual space, the method including:
   a player object control process of controlling an operation of a player object corresponding to each client device based on user operation information received from each client device;
   a group setting process of setting player objects within a predetermined distance among the player objects as one group;
   a common camera control process of arranging a common virtual camera for each group, and determining a position of the common virtual camera so that player objects that belong to a group corresponding to the common virtual camera are included in an imaging range, based on positions of the player objects that belong to the group;
   an individual camera control process of arranging an individual virtual camera for each player object that does not belong to the group, and determining a position of the individual virtual camera so that a player object corresponding to the individual virtual camera is included in an imaging range, based on a position of the player object; and
   an image generation process of generating a three-dimensional virtual space image, captured by the common virtual camera, to be transmitted to a client device corresponding to each of the player objects that belong to the group, and generating a three-dimensional virtual space image, captured by the individual virtual camera, to be transmitted to a client device corresponding to each player object that does not belong to the group.
[12] An image processing method executed by an image processing system that includes a client device and a server device that are connected to each other through a communication network, generates a player object operated by a user of each client device in a common three-dimensional virtual space, and generates an image in the three-dimensional virtual space, the method causing the server device to execute:
   a player object control process of controlling an operation of a player object corresponding to each client device based on user operation information received from each client device;
   a group setting process of setting player objects within a predetermined distance among the player objects as one group;
   a common camera control process of arranging a common virtual camera for each group, and determining a position of the common virtual camera so that player objects that belong to a group corresponding to the common virtual camera are included in an imaging range, based on positions of the player objects that belong to the group;
   an individual camera control process of arranging an individual virtual camera for each player object that does not belong to the group, and determining a position of the individual virtual camera so that a player object corresponding to the individual virtual camera is included in an imaging range, based on a position of the player object; and
   an image generation process of generating a three-dimensional virtual space image, captured by the common virtual camera, to be transmitted to a client device corresponding to each of the player objects that belong to the group, and generating a three-dimensional virtual space image, captured by the individual virtual camera, to be transmitted to a client device corresponding to each player object that does not belong to the group.

### Industrial Applicability

According to one of the embodiments of the present invention, it is useful for reducing a load of an image generation process of a server device.

### Reference Signs List

- 10: VIDEO GAME PROCESSING SERVER
- 11: PLAYER OBJECT CONTROLLER
- 12: GROUP SELECTOR
- 13: COMMON CAMERA CONTROLLER
- 14: INDIVIDUAL CAMERA CONTROLLER
- 15: IMAGE GENERATOR
- 16: ENEMY OBJECT CONTROLLER
- 20, 201 to 20N: CLIENT DEVICE
- 30: COMMUNICATION NETWORK
- 50: PLAYER OBJECT
- 55: ENEMY OBJECT
- 60: COMMON VIRTUAL CAMERA
- 65: INDIVIDUAL VIRTUAL CAMERA
- 70: REGION
- 100: VIDEO GAME PROCESSING SYSTEM
- 400: COMMUNICATION NETWORK

## Claims

1. An image processing program causing a computer device which is a server device that is connected to communicate with one or more client devices, generates a player object operated by a user of each client device in a common three-dimensional virtual space, and generates an image in the three-dimensional virtual space to function as:
a player object controller that controls an operation of a player object corresponding to each client device based on user operation information received from each client device;
a group setter that sets player objects within a predetermined distance among the player objects as one group;
a common camera controller that arranges a common virtual camera for each group, and determining a position of the common virtual camera so that player objects that belong to a group corresponding to the common virtual camera are included in an imaging range, based on positions of the player objects that belong to the group;
an individual camera controller that arranges an individual virtual camera for each player object that does not belong to the group, and determining a position of the individual virtual camera so that a player object corresponding to the individual virtual camera is included in an imaging range, based on a position of the player object; and
an image generator that generates a three-dimensional virtual space image, captured by the common virtual camera, to be transmitted to a client device corresponding to each of the player objects that belong to the group, and generating a three-dimensional virtual space image, captured by the individual virtual camera, to be transmitted to a client device corresponding to each player object that does not belong to the group.

2. The image processing program according to claim 1,
wherein the common camera controller calculates a region including all of the player objects that belong to the group based on positions of the player objects that belong to the group, and determines the position of the common virtual camera so that the region is included in an imaging range of the common virtual camera using the center of the region as a point of gaze.

3. The image processing program according to claim 2,
wherein the group setter releases the group setting when the region calculated by the common camera controller is larger than a predetermined size.

4. The image processing program according to any one of Claims 1 to 3,
wherein the image processing program causes the computer device to further function as:
an enemy object controller that generates an enemy object that fights with the player object in the three-dimensional virtual space and controlling an operation of the enemy object,
wherein the common camera controller determines the position of the common virtual camera based on a position of the enemy object in addition to the positions of the player objects that belong to the group.

5. The image processing program according to any one of claims 1 to 4,
wherein the group setter releases the group setting when a positional relationship of the player objects that belong to the group satisfies a predetermined release condition.

6. An image processing system that includes a client device and a server device that are connected to each other through a communication network, generates a player object operated by a user of each client device in a common three-dimensional virtual space, and generates an image in the three-dimensional virtual space,
the server device comprising:
a player object controller that controls an operation of a player object corresponding to each client device based on user operation information received from each client device;
a group setter that sets player objects within a predetermined distance among the player objects as one group;
a common camera controller that arranges a common virtual camera for each group, and determining a position of the common virtual camera so that player objects that belong to a group corresponding to the common virtual camera are included in an imaging range, based on positions of the player objects that belong to the group;
an individual camera controller that arranges an individual virtual camera for each player object that does not belong to the group, and determining a position of the individual virtual camera so that a player object corresponding to the individual virtual camera is included in an imaging range, based on a position of the player object; and
an image generator that generates a three-dimensional virtual space image, captured by the common virtual camera, to be transmitted to a client device corresponding to each of the player objects that belong to the group, and generating a three-dimensional virtual space image, captured by the individual virtual camera, to be transmitted to a client device corresponding to each player object that does not belong to the group.
